# EUROPEAN PATENT SPECIFICATION

(11) **EP 1 854 710 B1**
(45) Date of publication and mention of the grant of the patent: **14.05.2014**
(21) Application number: 07106776.3
(22) Date of filing: 24.04.2007
(51) Int. Cl.: B62H 1/00, B62H 1/02

(54) **Stand of motorcycle**
Motorradständer
Support de motocyclette

(30) Priority: 12.05.2006 JP 2006134385
(43) Date of publication of application: 14.11.2007
(73) Proprietor: HONDA MOTOR CO., LTD., Tokyo (JP)
(72) Inventor: Yabe, Hiroyuki, c/o KABUSHIKI KAISHA HONDA GIJUTSU KENKYUSHO, Saitama (JP); Niwano, Atsuko KABUSHIKI KAISHA HONDA GIJUTSU KENKYUSHO, Saitama (JP)
(74) Representative: Quinterno, Giuseppe

(56) References cited:
- EP-A1- 0 695 681
- JP-U- 55 092 587
- US-A- 4 582 336
- US-A- 4 671 374

## Description

The present invention relates to a motorcycle stand of the kind defined in the preamble of claim 1.

A motorcycle stand of that kind is disclosed in JP 55092587U.

The stand disclosed in the said prior document can be turned to parking position by a hydraulic piston-cylinder unit in conjunction with the operation of the stand upright after the stand supporting members is pushed downsward. With that prior solution, in order to pass to the stored condition of the stand, the motorcycle is first pushed forward, then the stand moves backward, the actuation of the hydraulic piston-cylinder unit is released and, finally, the stand supporting member is raised by a spring.

The object of the invention is to provide a stand of a motorcycle that can be easily stored by a small force.

This object is achieved according to the invention by the stand defined in Claim 1.

Further, in a stand according to the invention ad defined in Claim 2, in addition to the configuration of the invention according to Claim 1, the operating unit is an operating lever pushed down when the stand is stored and supported by the body frame so that the operating lever can be vertically rocked.

A spring (61 in the following embodiments) is equivalent to the pressing means in the invention.

According to the invention as defined in Claim 1, as the stand supporting member is turned upward when the operating unit is operated for storage in the parked condition in which the stand is turned to the standing position while the stand supporting member is located in the lower limit turned position, the stand coupled to the stand supporting member is also lifted from the ground together with the stand supporting member, the parked condition is released by small force without an effect on the storing operation by the weight of the motorcycle applied to the stand in the parked condition, and the stand can be stored.

Furthermore, as the lower limit turned position of the stand supporting member is held in parking by the turning locking means operated according to the operation of the operating unit, the parked condition of the motorcycle can be securely maintained.

Moreover, since the stand is turned from the standing position to the stored position by the tension of the pressing means when the stand supporting member is turned upward from the parked condition, no intricate operation is required to store the stand, and the storing operation is more facilitated.

Further, according to the invention as defined in Claim 2, the operating lever has only to be pushed up when the stand is stored, only small force is required for the storing operation, compared with operation for pushing up, and the storing operation is more facilitated.

Embodiments of the invention will be described below, referring to the attached drawings, wherein
Fig. 1 is a side view showing a scooter-type motorcycle equivalent to a first embodiment,
Fig. 2 is an enlarged side view showing the vicinity of a stand,
Fig. 3 is an enlarged perspective view showing the vicinity of the stand,
Fig. 4 is a side view showing the vicinity of an operating lever,
Fig. 5 is a side view showing the stand in a parked condition,
Fig. 6 is a side view showing the stand when a stand supporting member is lifted until a front wheel is grounded,
Fig. 7 is a side view showing the stand when the stand supporting member is further lifted from the condition shown in Fig. 6,
Fig. 8 is a side view showing the stand when it is stored,
Fig. 9 is an enlarged side view showing the vicinity of a stand equivalent to a second embodiment, and
Fig. 10 is a plan showing a part of Fig. 9.

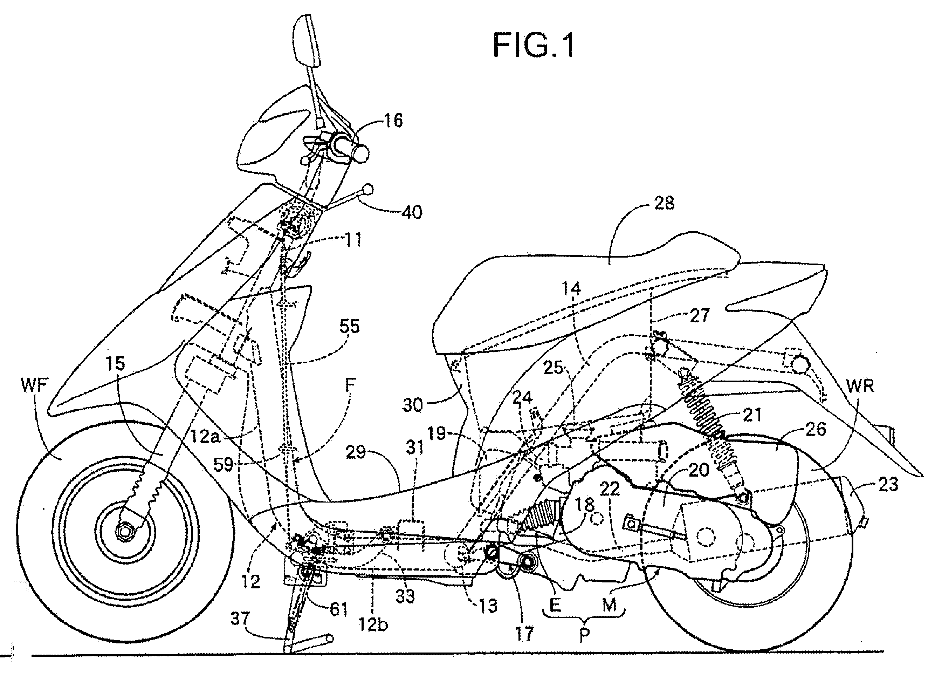

Figs. 1 to 8 show a first embodiment of the invention.

First, as shown in Fig. 1, a body frame F of the scooter-type motorcycle is provided with a main frame pipe 12 to the front end of which a head pipe 11 is fastened, a cross pipe 13 fastened to the rear end of the main frame pipe 12 at a right angle and a pair of right and left rear frame pipes 14 the respective front ends of which connect to both ends of the cross pipe 13.

The main frame pipe 12 is formed by integrating a down frame part 12a inclined backward and downward from the head pipe 11 and a lower frame part 12b extended backward and substantially horizontally from the rear end of the down frame part 12a. The cross pipe 13 is extended in a lateral direction of the body frame F and the axial center of the cross pipe 13 is fastened to the rear end of the main frame pipe 12, that is, the rear end of the lower frame part 12b at a right angle.

A front fork 15 that straddles the front wheel WF is supported by the head pipe 11 so that the front fork can be steered and a steering handlebar 16 is coupled to the upper end of the front fork 15.

A power unit P including an engine E arranged on the front side of a rear wheel WR and a transmission M arranged on the left side of the rear wheel WR is supported by the respective fronts of both rear frame pipes 14 out of the body frame F via a link 17 so that the power unit can be vertically rocked and the rear wheel WR is journalled to the rear of the power unit P.

The transmission M is coupled to a crankcase 18 of the engine E, is housed in a transmission case 20 extended on the left side of the rear wheel WR, and a rear cushion unit 21 is provided between the rear of the transmission case 20 and the left rear frame pipe 14 out of the pair of right and left rear frame pipes 14. An exhaust pipe 22 for conducting exhaust gas from a lower part of a cylinder head 19 in the engine E is extended from the engine E to the left side of the rear wheel WR and is connected to an exhaust muffler 23 arranged on the right side of the rear wheel WR. A carburetor 25 is connected to an upper part of the cylinder head 19 in the engine E via an intake pipe 24 and is connected to an air cleaner 26 arranged on the left side of the rear wheel WR at the back of the carburetor 25.

A housing box 27 that can house a helmet and other is arranged and supported between the respective fronts of both rear frame pipes 14 on the upside of the engine E and a seat 28 for occupants that covers the housing box 27 from its upside is supported by the front and the upside of the housing box 27 so that the seat can be opened.

A part of the engine E and the body frame F are covered with a body cover 30 provided with a step floor 29 for putting feet of the occupants sitting on the seat 28.

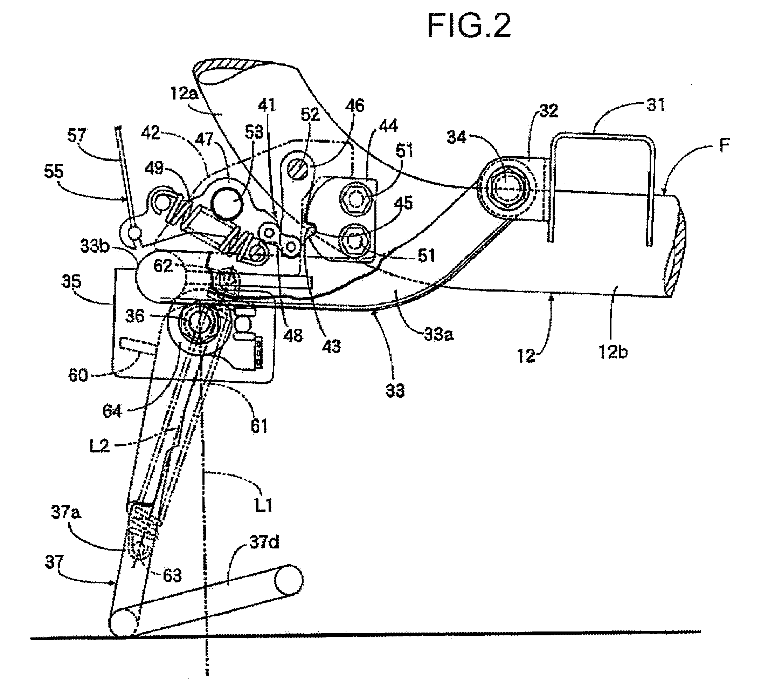

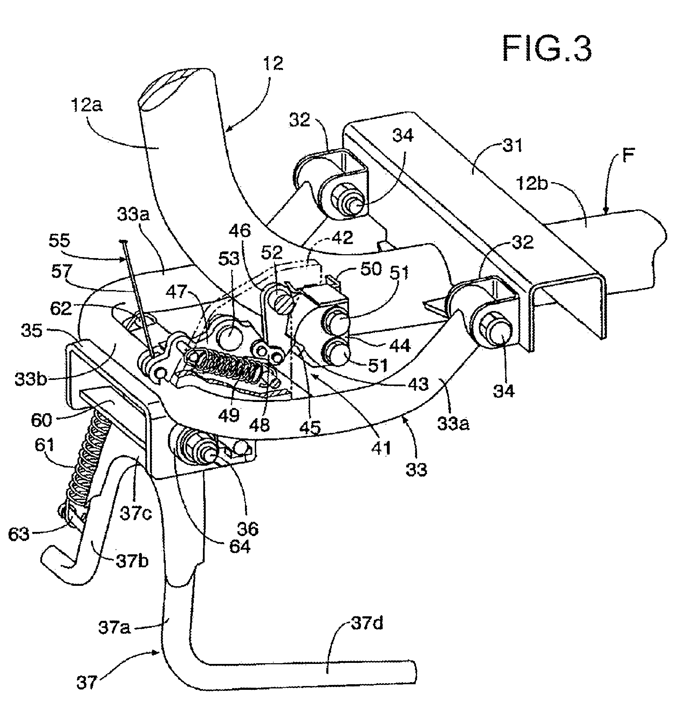

As also shown in Figs. 2 and 3, the center in a longitudinal direction of a support stay 31 open downward and extended in a direction of the width of the body in a substantial U-shaped cross section is fastened to an upper part in the middle in a longitudinal direction of the lower frame part 12b out of the main frame pipe 12 of the body frame F by welding or other. First brackets 32, 32 are provided to the respective fronts of both ends of the support stay 31 protruded on both lateral sides from the lower frame part 12b.

A stand supporting member 33, the lower limit turned position of which is shown in Figs. 1 to 3, is supported by the support stay 31 so that the stand supporting member can be vertically turned. The stand supporting member 33 is integrally provided with a pair of right and left arm 33a, 33a the respective rear ends of which are turnably supported by both first brackets 32, 32 via first support shafts 34, 34 coaxial with the first brackets and which are extended mutually in parallel, and a coupling part 33b that connects the respective front ends of the arms 33a. Further the stand supporting member 33 is formed by bending a pipe in a substantial U shape.

The stand 37 is turnably coupled to a second bracket 35 fastened to the coupling part 33b of the stand supporting member 33 via a stand shaft 36 parallel to the first support shafts 34. The stand 37 is provided with a pair of left and right legs 37a, 37b and a coupling part 37c (fig. 3) that couples respective one ends of both legs 37a, 37b. The stand shaft 36 fixed to the coupling part 37c is turnably supported by the second bracket 35. A footstep 37d for stepping on it is integrally coupled to the other end of the left leg 37a out of both legs 37a, 37b.

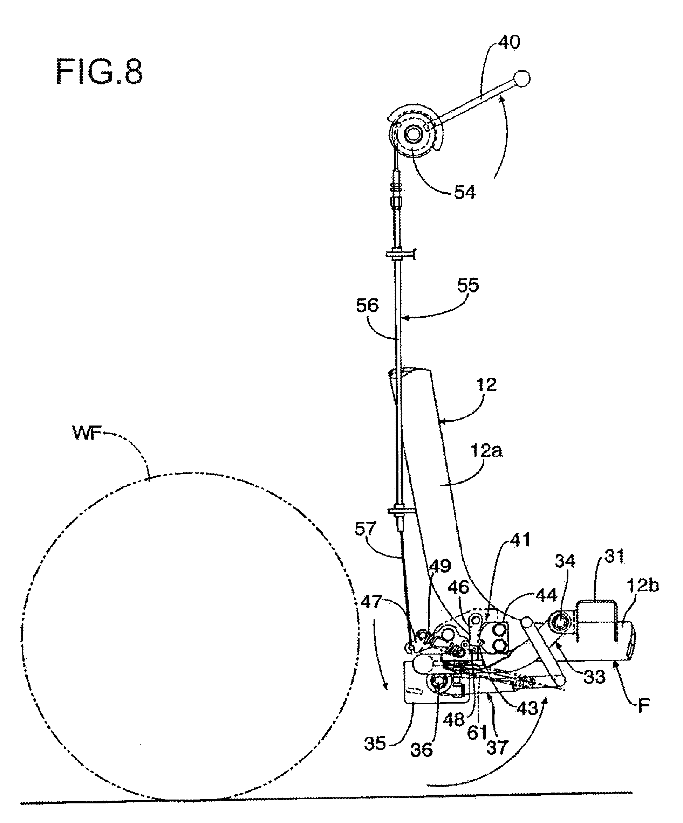

The stand 37 is coupled to the second bracket 35 of the stand supporting member 33 so that the stand can be turned between its standing position and its stored position, the motorcycle can be parked with the front wheel WF lifted from the ground while the rear wheel WR is grounded when the stand is turned to the standing position shown in Figs. 1 to 3 in the lower limit turned position of the stand supporting member 33, and the stand can be turned from the standing position to the stored position shown in Fig. 8 for releasing the parked condition when the stand supporting member 33 is turned upward from the lower limit turned position.

To turn the stand 37 from the stored position to the standing position so as to acquire the parked condition while the stand supporting member 33 is located in the lower limit turned position, the occupant has only to step on the footstep 37d of the stand 37 and turn the stand.

As the front wheel WF is lifted from the ground while the rear wheel WR is grounded in the parked condition, the rider can turn the stand 37 to the standing position with the rider seated on the seat 28 for occupants. At that time, as the weight of the heavy engine E and the weight of the rider have no effect on the stand 37, the stand 37 can be easily stood.

As shown in Fig. 1, the operating lever 40 which is an operating unit is supported by the body frame F in front of the head pipe 11 so that the rider can manually operate the operating lever vertically from the side of the seat 28 for the occupants and the stand supporting member 33 is vertically turned according to the manual operation of the operating lever 40.

A turning locking means 41 (figs. 2 and 3), for switching a locked condition in which the stand supporting member 33 is held in the lower limit turned position when the operating lever 40 is operated for parking and an unlocked condition in which the stand supporting member 33 can be turned upward from the lower limit turned position when the operating lever 40 is operated for storage according to the operation of the operating lever 40, is provided between the body frame F and the stand supporting member 33.

The turning locking means 41 is provided between the main frame pipe 12 and a supporting plate 42 coupled to the second bracket 35 fastened to the coupling part 33b of the stand supporting member 33. The turning locking means 41 includes a fitting member 44 provided with a fitting concave portion 43 in the front and fastened to a part where the down frame part 12a and the lower frame part 12b are coupled, a fitting arm 46 provided with a fitting pick 45 fitted into the fitting concave portion 43 so that the fitting pick can be unfitted and turnably supported by the supporting plate 42, a control lever 47 that can be turned based upon an axis parallel to an axis of the turning of the fitting arm 46 and is supported by the supporting plate 42 in front of the fitting arm 46, a coupling link 48 that couples the control lever 47 and the fitting arm 46, and a helical spring 9 provided between the supporting plate 42 and the control lever 47.

The fitting member 44 is fastened to a stay 50 fastened to each left side of the down frame part 12a and the lower frame part 12b respectively of the main frame 12 by a pair of bolts 51, 51 for example. The supporting plate 42 is stood at the end of the left side of the second bracket 35 corresponding to the fitting member 44, and the fitting arm 46, the control lever 47 and the coupling link 48 are arranged inside the supporting plate 42.

An upper end of the fitting arm 46 extended vertically long in front of the fitting member 44 is supported by the stand shaft 36 and a second support shaft 52 having a parallel axis with the support shaft 34 so that the fitting arm can be rocked by the supporting plate 42, and the fitting pick 45 that can be fitted into the fitting recessed portion 43 is protruded backward from the middle in a longitudinal direction of the fitting arm 46.

The control lever 47 is arranged in front of the fitting arm 46, an intermediate part of the control lever 47 is turnably supported by the supporting plate 42 via a third support shaft 53 parallel to the second support shaft 52, and one end of the control lever 47 is coupled to a lower part of the fitting arm 46 via the coupling link 48. The other end of the control lever 47 is protruded forward from the supporting plate 42 in a state that the fitting pick 45 is fitted into the fitting concave portion 43 and the helical spring 49 is provided between a part protruded from the supporting plate 42 of the control lever 47 and the supporting plate 42 so that the helical spring presses the control lever 47 on the side on which the fitting pick 45 is fitted into the fitting concave portion 43.

In addition, the fitting arm 46 and the control lever 47 are coupled via the coupling link 48 so that the fitting arm 45 and the control lever 47 are touched when the control lever 47 is turned by a predetermined angle on the side on which the fitting pick 45 is unfitted from the fitting concave portion 43 (clockwise in Figs. 1 and 2), and in a state that the fitting arm 46 and the control lever 47 are touched, the fitting arm 46 and the control lever 47 are never further turned on the side on which the fitting pick 45 is farther from the fitting member 44 for the stand supporting member 33.

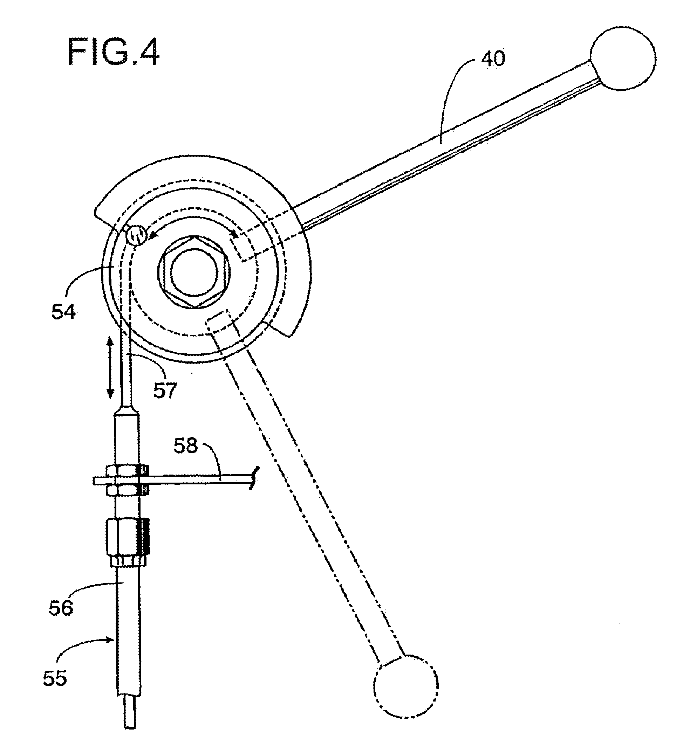

As shown in Fig. 4, the operating lever 40 is fixed to a drum 54 turnably supported by the body frame F. The control lever 47 of the turning locking means 41 and the drum 54 are coupled via a cable 55 pulled as the operating lever 40 is pushed up downward and the cable 55 is movably acquired by inserting an inner cable 57 into an outer cable 56.

One end of the outer cable 56 is fixed to a cable supporting plate 58 fixed to the body frame F on the downside of the drum 54, and one end of the inner cable 57 protruded from one end of the outer cable 56 is wound on the drum 54 and is coupled to the drum so that the quantity in which the inner cable is wound on the drum 54 is increased as the operating lever 40 is pushed down from a standing operation position shown by a full line in Fig. 4 to a storing operation position shown by a chain line in Fig. 4.

The other end of the outer cable 56 is fixed to a cable supporting plate 59 (see Fig. 1) fixed to an intermediate part of the down frame part 12a of the main frame pipe 12 and the other end of the inner cable 57 protruded from the other end of the outer cable 56 is coupled to the other end of the control lever 47.

Therefore, the control lever 47 is turned clockwise in Figs. 2 and 3 against the tension of the helical spring 49 as the operating lever 40 is turned downward from the standing operation position to the storing operation position and thereby, the fitting arm 46 is turned on the side on which the fitting pick 45 is unfitted from the fitting concave portion 43.

A stopper 60, touching the stand 37 in front in the standing position of the stand 37, is fixed to the second bracket 35, the respective lower ends of both legs 37a, 37b of the stand 37 touching the stopper 60, that is the grounded points of the stand 37, are located in front of a vertical line L1 passing the stand shaft 36, and when the stand supporting member 33 grounds the stand 37 turned on the side of the standing position in the lower limit turned position, the standing position of the stand 37 is held by the weight of the motorcycle.

In addition, a helical spring 61 as a pressing means that presses the stand 37 on the side of the stored position is provided between an intermediate part of the right leg 37b out of a part of legs 37a, 37b with which the stand 37 is provided and the stand supporting member 33. That is, one end of the spring 61 is coupled to a first coupling pin 62 planted on the right side of the second bracket 35 fastened to the stand supporting member 33, the other end of the spring 61 is coupled to a second coupling pin 63 planted on an intermediate part of the right leg 37b, and a straight line L2 between the first and second coupling pins 62, 63 is located at the back of the stand shaft 36.

The rear wheel WR is always grounded independent of whether the motorcycle is parked or not, and a stand position detection switch 64 for detecting that the stand shaft 36 of the stand 37 is turned to the standing position is attached to the outside face of the second bracket 35 throughout the stand shaft 36 so as to prevent the motorcycle from being started undesirably in the parked condition. When the stand position detection switch 34 detects that the stand 37 is located in the standing position, the ignition control of the engine E is executed so as to inhibit engine speed so that the engine speed is below engine speed at which a centrifugal clutch (not shown) provided between the engine E and the transmission M is connected.

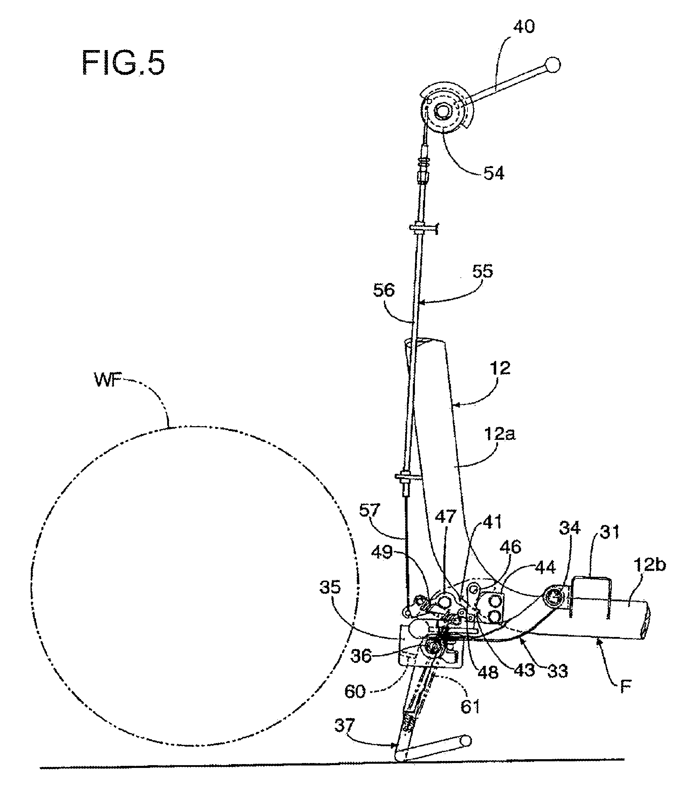

In the stand described above, as shown in Fig. 5, in the parked condition in which the stand 37 is turned to the standing position in the lower limit turned position of the stand supporting member 33, the lower limit turned position of the stand supporting member 33 is held by the turning locking means 41 unless the operating lever 40 is operated, the standing position of the stand 37 is held by the weight of the motorcycle, and the front wheel WF of the motorcycle is lifted from the ground.

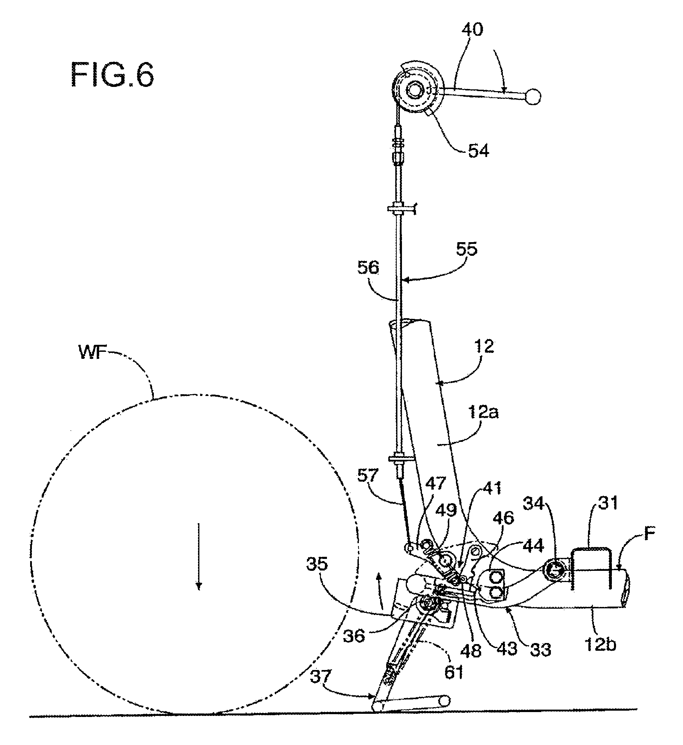

When the operating lever 40 is pushed down for storage as shown in Fig. 6 so as to release the parked condition, the control lever 47 is turned against the tension of the spring 49 because the cable 55 is pulled, the fitting arm 46 is turned on the side on which the fitting pick 45 is unfitted from the fitting concave portion 43 according to the turning of the control lever 47, the turning locking means 41 is made in an unlocked condition that enables the stand supporting member 33 to turn upward from the lower limit turned position, the stand supporting member 33 is turned upward by pulling the cable 55 in a state that the fitting arm 45 and the control lever 47 are touched, and the front wheel WF is grounded.

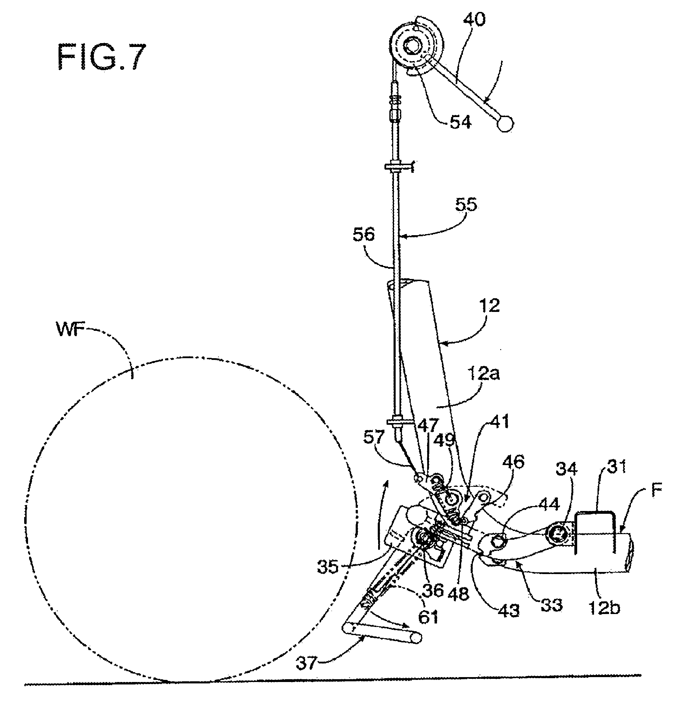

When the operating lever 40 is further pushed down and the stand supporting member 33 is turned upward until the stand 37 is lifted from the ground as shown in Fig. 7, the stand 37 is turned from the standing position to the stored position based upon the axis of the stand shaft 36 by the tension of the spring 61. When the rider releases his/her hand from the operating lever 40 at that time, the stand supporting member 33 is turned downward based upon each axis of the first support shafts 34 by its own weight as shown in Fig. 8 and is returned to the lower limit turned position, and the operating lever 40 is returned to an original position on the upside. In this condition, the turning locking means 41 is made in a locked condition in which the fitting pick 45 is fitted into the fitting concave portion 43 and the lower limit turned position of the stand supporting member 33 is held.

Next, to explain the action of the first embodiment, the stand supporting member 33 turned upward in linkage with the storing operation of the operating lever 40 is supported by the main frame pipe 12 of the body frame F so that the stand supporting member can be vertically turned, and the stand 37 that enables acquiring the parked condition when the stand is turned to the standing position in the lower limit turned position of the stand supporting member 33 is coupled to the stand supporting member 33 so that the stand can be turned between the standing position and the stored position.

Therefore, when the operating lever 40 is operated for storage in the parked condition in which the stand 37 is stood while the stand supporting member 33 is located in the lower limit turned position, the stand supporting member 33 is turned upward, the stand 37 coupled to the stand supporting member 33 is also lifted from the ground together with the stand supporting member 37, the parked condition is released by small force without effect on storing operation by the weight of the motorcycle applied to the stand 37 in the parked condition, and the stand 37 can be stored.

Besides, as the turning locking means 41 that switches the locked condition in which the stand supporting member 33 is held in the lower limit turned position and the unlocked condition in which the stand supporting member 33 can be turned upward from the lower limit turned position according to the operation of the operating lever 40 is provided between the main frame pipe 12 of the body frame F and the stand supporting member 33, the lower limit turned position of the stand supporting member 33 is held in parking by the turning locking means 41 operated according to the operation of the operating lever 40 and the parked condition of the motorcycle can be securely maintained.

In addition, as the spring 61 that presses the stand 37 on the side of the stored position is provided between the stand supporting member 33 and the stand 37, the stand 37 is turned from the standing position to the stored position by the tension of the spring 61 when the stand supporting member 33 is turned upward from the parked condition, no intricate operation is required to store the stand 37, and the storing operation is more facilitated.

Further, the operating lever 40 pushed down when the stand 37 is stored is supported by the body frame F so that the operating lever can be vertically rocked, has only to be pushed down when the stand 37 is stored, only a smaller force is required for the storing operation, compared with the force required for operation for pushing up the operating lever, and the storing operation is made easier.

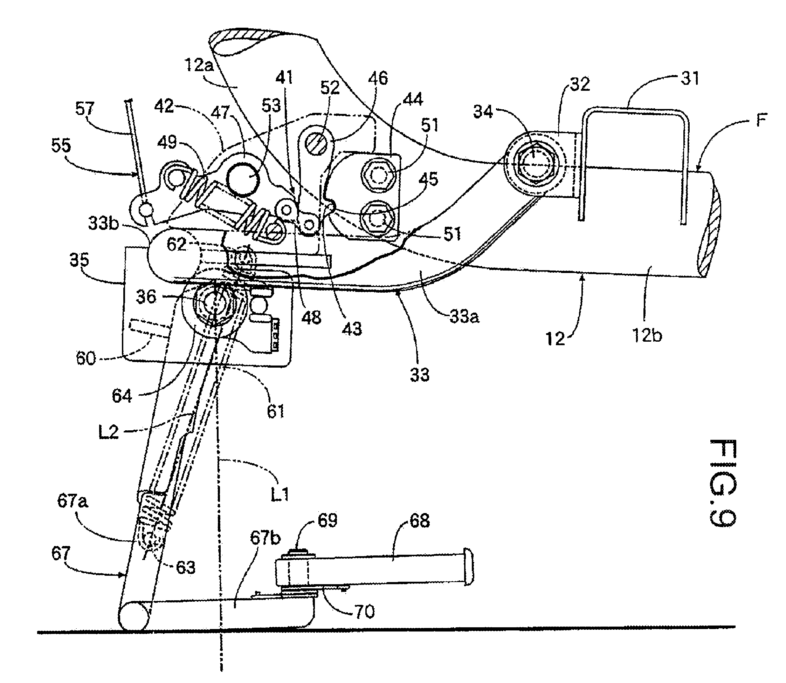

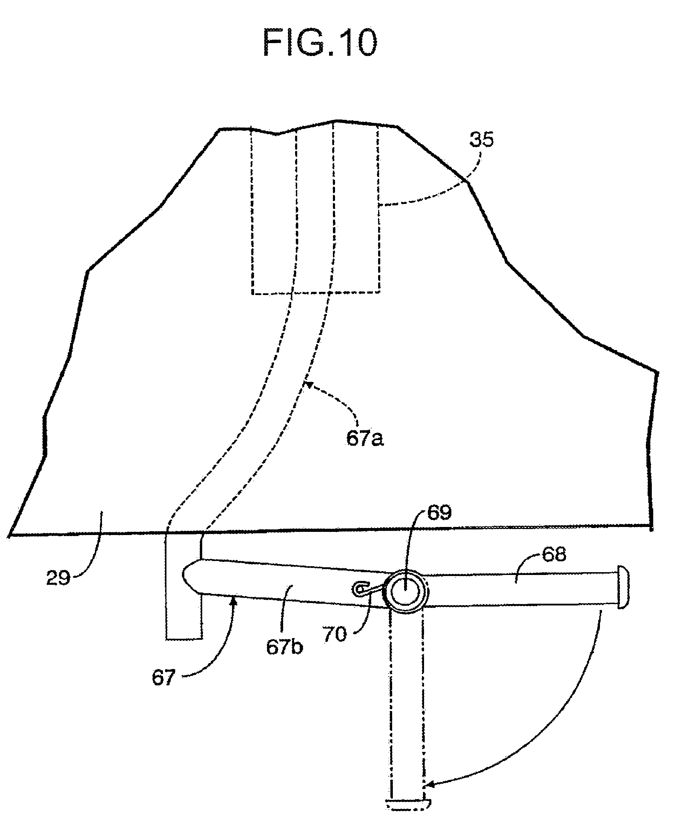

Figs. 9 and 10 show a second embodiment of the invention, Fig. 9 is an enlarged side view showing the vicinity of the stand, and Fig. 10 is a plan showing a part of Fig. 9.

The same reference numeral is allocated to a part corresponding to that in the first embodiment and its detailed description is omitted.

First, as shown in Fig. 9, a stand supporting member 33 is supported by a support stay 31 fastened to an intermediate upper part in a longitudinal direction of a lower frame part 12b of a main frame pipe 12 of a body frame F so that the stand supporting member can be vertically turned and a stand 67 is turnably coupled to a second bracket 35 fastened to a coupling part 33b of the stand supporting member 33 via a stand shaft 36. Besides, a turning locking means 41 is provided between the body frame F and the stand supporting member 33 as in the first embodiment. Further, a helical spring 61 that presses the stand 67 on the side of a stored position is provided between the stand 67 and the stand supporting member 33.

The stand 67 is provided with a stand main part 67a which is formed in a substantial U shape so that lower parts of both ends can be grounded and the center of which is turnably coupled to the second bracket 35 via the stand shaft 36, and a lever support 67b one end of which is integrally coupled to a lower end on the left side of the stand main part 67a so that the lever support is closely opposite to ground spots when the lower parts of both ends of the stand main part 67a are grounded. The lever support 67b is coupled to the lower end on the left side of the stand main part 67a so that the lever support is extended substantially in parallel with the left end of a step floor 29 when the lever support is viewed from the top as shown in Fig. 10.

In addition, the base of a footstep lever 68 is coupled to the other end of the lever support 67b via a support shaft 69 and a range of the turning of the footstep lever 68 is regulated to be approximately 90 degrees by a stopper not shown. The footstep lever 68 is turned in a range of the substantial 90 degrees between a stored position shown by a full line in Fig. 10 in which the footstep lever substantially linearly connects with the lever support 67b close to the left end of the step floor 29 in the top view and a protruded position shown by a chain line in Fig. 10 in which the footstep lever is protruded outside from the other end of the lever support 67b, and a torsion spring 70 that presses and turns the footstep lever 68 on the side of the stored position is provided between the lever support 67b and the footstep lever 68.

According to the second embodiment, to turn the stand 67 from the stored position to a standing position so as to acquire a parked condition while the stand supporting member 33 is located in the lower limit turned position, the stand has only to be turned by stepping on the footstep lever 68 turned to the protruded position against the tension of the torsion spring 70, and the turning to the standing position of the stand 67 is facilitated. In addition, as the footstep lever 68 is automatically returned to the stored position close to the left end of the step floor 29 in the top view when a rider's foot is released from the footstep lever 68, a banking angle of a motorcycle can be set to a relatively large value because the footstep lever 68 is not protruded sideway when the motorcycle is not parked.

Embodiments of the invention have been described, however the invention is not limited to these embodiments, and various design changes without deviating from the invention disclosed in the claims are allowed.

For example, the invention can be also applied to a motorcycle except the scooter-type motorcycle and a bicycle.

### Main Reference Numerals

- 33: Stand supporting member
- 37, 67: Stand
- 40: Operating lever as an operating unit
- 41: Turning locking means
- 61: Spring as pressing means
- F: Body frame

## Claims

1. A motorcycle stand (37, 67) that can be turned between a standing position for acquiring a parked condition and a stored position for releasing the parked condition and can be turned at least from the standing position to the stored position according to the operation of an operating unit (40), wherein:
a stand supporting member (33) turned upward in linkage with the operation for storage of the operating unit (40) is supported by a body frame (F) so that the stand supporting member can be vertically turned; and
the stand (37, 67) that enables acquiring the parked condition when the stand is turned to the standing position in a lower limit turned position of the stand supporting member (33) is coupled to the stand supporting member (33) so that the stand can be turned between the standing position and the stored position;
the stand (37, 67) being **characterised in that**
a turning locking means (41) that switches a locked condition in which the stand supporting member (33) is held in the lower limit turned position and an unlocked condition in which the stand supporting member (33) can be turned upward from the lower limit turned position according to the operation of the operating unit (40) is provided between the body frame (F) and the stand supporting member (33), and
a pressing means (61) that presses the stand (37, 67) on the side of the stored position is provided between the stand supporting member (33) and the stand (37, 67),
whereby the stand (37, 67) is turned from the standing position to the stored position by said pressing means (61) and, when the stand (37; 67) is in the stored position, the stand supporting member (33) is turned downward by its own weight.

2. The stand of the motorcycle according to Claim 1,
wherein: the operating unit (40) is an operating lever pushed down when the stand (37, 67) is stored and supported by the body frame (F) so that the operating lever can be vertically rocked.

## Patentansprüche

1. Motorradständer (37, 67), der zwischen einer stehenden Position zum Annehmen eines geparkten Zustands und einer untergebrachten Position zum Lösen des geparkten Zustands gedreht werden kann und der zumindest von der stehenden Position zu der untergebrachten Position entsprechend der Betätigung einer Betätigungseinheit (40) gedreht werden kann, wobei:
ein Ständerstützelement (33), das in Verbindung mit der Betätigung zur Unterbringung der Betätigungseinheit (40) nach oben gedreht ist, von einem Körperrahmen (F) gestützt ist, sodass das Ständerstützelement vertikal gedreht werden kann; und
der Ständer (37, 67), der es erlaubt, den geparkten Zustand anzunehmen, wenn der Ständer zu der stehenden Position in einer unteren Grenzdrehposition des Ständerstützelements (33) gedreht ist, zu dem Ständerstützelement (33) gekoppelt ist, sodass der Ständer zwischen der stehenden Position und der untergebrachten Position gedreht werden kann;
wobei der Ständer (37, 67) **dadurch gekennzeichnet ist, dass**
eine Drehsperreinrichtung (41), die einen gesperrten Zustand, in dem das Ständerstützelement (33) in der unteren Grenzdrehposition gehalten ist, und einen nicht gesperrten Zustand schaltet, in dem das Ständerstützelement (33) nach oben von der unteren Grenzdrehposition gemäß der Betätigung der Betätigungseinheit (40) gedreht werden kann, zwischen dem Körperrahmen (F) und dem Ständerstützelement (33) vorgesehen ist, und
eine Drückeinrichtung (61), die den Ständer (37, 67) auf der Seite der untergebrachten Position drückt, zwischen dem Ständerstützelement (33) und dem Ständer (37, 67) vorgesehen ist,
wodurch der Ständer (37, 67) von der stehenden Position zu der untergebrachten Position mittels der Drückeinrichtung (61) gedreht wird und, wenn der Ständer (37; 67) in der untergebrachten Position ist, das Ständerstützelement (33) nach unten mittels seines eigenen Gewichts gedreht wird.

2. Ständer eines Motorrads nach Anspruch 1,
wobei: die Betätigungseinheit (40) ein Betätigungshebel ist, der nach unter gedrückt ist, wenn der Ständer (37, 67) mittels des Körperrahmens (F) untergebracht und gestützt ist, sodass der Betätigungshebel vertikal geschwungen werden kann.

## Revendications

1. Béquille de motocyclette (37, 67) qui peut être pivotée entre une position debout pour acquérir un état garé et une position rangée pour libérer de l'état garé et qui peut être pivotée au moins de la position debout vers la position rangée suivant le fonctionnement d'une unité fonctionnelle (40), dans laquelle :
un élément de support de béquille (33) tourné vers le haut en liaison avec la fonction de rangement de l'unité fonctionnelle (40) est supporté par un cadre de structure (F) de telle manière que l'élément de support de béquille peut être tourné verticalement ; et
la béquille (37, 67) qui permet d'acquérir l'état garé quand la béquille est pivotée dans sa position debout dans une position pivotée inférieure limite de l'élément de support de béquille (33) est couplée à l'élément de support de béquille (33) de telle manière que la béquille peut être pivotée entre la position debout et la position rangée ;
la béquille (37, 67) étant **caractérisée en ce que**
des moyens de blocage en rotation (41) qui commutent un état bloqué dans lequel l'élément de support de béquille (33) est maintenu dans la position pivotée inférieure limite et un état débloqué dans lequel l'élément de support de béquille (33) peut être pivoté vers le haut depuis la position pivotée inférieure limite suivant le fonctionnement de l'unité fonctionnelle (40) sont placés entre le cadre de structure (F) et l'élément de support de béquille (33), et
des moyens de pression (61) qui pressent la béquille (37, 67) sur le côté de la position rangée sont placés entre l'élément de support de béquille (33) et la béquille (37, 67),
moyennant quoi la béquille (37, 67) est pivotée de la position debout vers la position rangée par lesdits moyens de pression (61) et, quand la béquille (37, 67) est dans la position rangée, l'élément de support de béquille (33) est pivoté vers le bas par son propre poids.

2. Béquille de motocyclette selon la revendication 1,
dans laquelle : l'unité fonctionnelle (40) est un levier fonctionnel poussé vers le bas quand la béquille (37, 67) est rangée et supportée par le cadre de structure (F) de telle manière que le levier fonctionnel peut être basculé verticalement.
